# EUROPEAN PATENT APPLICATION

(11) **EP 4 574 247 A1**
(43) Date of publication of application: **25.06.2025**
(21) Application number: 23854759.0
(22) Date of filing: 14.07.2023
(51) Int. Cl.: B01D 63/00, B01D 63/10, B01D 53/22

(54) **SPIRAL MEMBRANE ELEMENT AND MEMBRANE SEPARATION METHOD**

(30) Priority: 18.08.2022 JP 2022130415; 14.03.2023 JP 2023039359
(71) Applicant: NITTO DENKO CORPORATION, Ibaraki-shi Osaka 567-8680 (JP)
(72) Inventor: KATAGIRI, Makoto, Ibaraki-shi, Osaka 567-8680 (JP); NAKAMURA, Yoshihiro, Ibaraki-shi, Osaka 567-8680 (JP)
(74) Representative: Hoffmann Eitle
(86) International application number: PCT/JP2023/026162
(87) International publication number: WO 2024/038722

(57) **Abstract**

The present invention provides a new spiral membrane element suitable for recovering a permeated fluid efficiently. A spiral membrane element 10 of the present invention includes: a central tube 21; a separation membrane 12 that is wound around the central tube 21 and separates a feed fluid S into a permeated fluid S1 and a non-permeated fluid S2; and a feed space and a permeation space separated from each other by the separation membrane 12. The permeation space communicates with an outer space 30 of the spiral membrane element 10 via an outer circumferential surface 10s of the spiral membrane element 10.

## Description

### TECHNICAL FIELD

The present invention relates to a spiral membrane element and a membrane separation device.

### BACKGROUND ART

A membrane separation method has been developed as a method for separating an acid gas such as carbon dioxide from a gas mixture containing the acid gas. The membrane separation method allows an efficient separation of an acid gas with a suppressed operation cost, compared with an absorption method according to which an acid gas contained in a gas mixture is absorbed by an absorbent to be separated.

A spiral membrane element is used for the membrane separation method, for example. The spiral membrane element includes a central tube and a separation membrane that is wound around the central tube. In a conventional spiral membrane element, a permeated fluid having permeated through a separation membrane is guided to an inside of a central tube via an opening formed in the central tube. The permeated fluid collected via the opening of the central tube moves inside the central tube and is delivered to an outside of the spiral membrane element. Patent Literature 1 discloses an example of the conventional spiral membrane element.

### CITATION LIST

### Patent Literature

Patent Literature 1: JP 2015-024372 A

### SUMMARY OF INVENTION

### Technical Problem

A new spiral membrane element suitable for recovering a permeated fluid efficiently is required.

### Solution to Problem

The present invention provides a spiral membrane element including:
a central tube;
a separation membrane that is wound around the central tube and separates a feed fluid into a permeated fluid and a non-permeated fluid; and
a feed space and a permeation space separated from each other by the separation membrane, wherein
the permeation space communicates with an outer space of the spiral membrane element via an outer circumferential surface of the spiral membrane element.

The present invention further provides a spiral membrane element including:
a central tube;
a separation membrane that is wound around the central tube and separates a feed fluid into a permeated fluid and a non-permeated fluid; and
a feed space and a permeation space separated from each other by the separation membrane, wherein
the permeated fluid is delivered from the permeation space to an outer space of the spiral membrane element via an outer circumferential surface of the spiral membrane element.

The present invention further provides a membrane separation device including:
the above-mentioned spiral membrane element; and
a casing that accommodates the spiral membrane element.

### Advantageous Effects of Invention

The present invention can provide a new spiral membrane element suitable for recovering a permeated fluid efficiently.

### BRIEF DESCRIPTION OF DRAWINGS

FIG. 1 is a developed perspective view showing schematically a spiral membrane element according to one embodiment of the present invention.
FIG. 2 is a schematic cross-sectional view of the spiral membrane element.
FIG. 3 is a schematic cross-sectional view of a separation membrane included in the spiral membrane element.
FIG.4A is a diagram for explaining a method for producing the spiral membrane element.
FIG. 4B is a diagram for explaining a method for producing the spiral membrane element.
FIG. 5 is a schematic cross-sectional view showing an example of a membrane separation device.
FIG. 6 is a schematic cross-sectional view showing another example of the membrane separation device.

### DESCRIPTION OF EMBODIMENTS

A spiral membrane element according to a first aspect of the present invention is a spiral membrane element including:
a central tube;
a separation membrane that is wound around the central tube and separates a feed fluid into a permeated fluid and a non-permeated fluid; and
a feed space and a permeation space separated from each other by the separation membrane, wherein
the permeation space communicates with an outer space of the spiral membrane element via an outer circumferential surface of the spiral membrane element.

A spiral membrane element according to a second aspect of the present invention is a spiral membrane element including:
a central tube;
a separation membrane that is wound around the central tube and separates a feed fluid into a permeated fluid and a non-permeated fluid; and
a feed space and a permeation space separated from each other by the separation membrane, wherein
the permeated fluid is delivered from the permeation space to an outer space of the spiral membrane element via an outer circumferential surface of the spiral membrane element.

According to a third aspect of the present invention, for example, the spiral membrane element according to the first or second aspect further includes a first flow passage material that forms the outer circumferential surface and allows the permeated fluid to pass through the first flow passage material.

According to a fourth aspect of the present invention, for example, the spiral membrane element according to the third aspect further includes a permeation spacer disposed in the permeation space, wherein the permeation spacer is connected to the first flow passage material.

According to a fifth aspect of the present invention, for example, the spiral membrane element according to the fourth aspect further includes a second flow passage material that is connected to the permeation spacer and is wound around the central tube on a side closer to the central tube than the separation membrane is.

According to a sixth aspect of the present invention, for example, the spiral membrane element according to any one of the first to fifth aspects further includes a feed spacer disposed in the feed space, wherein the feed spacer is surrounded by the separation membrane folded in half.

According to a seventh aspect of the present invention, for example, in the spiral membrane element according to any one of the first to sixth aspects, the central tube has an opening that allows an inside of the central tube to communicate with an outside of the central tube, and the permeation space communicates with the inside of the central tube via the opening.

According to an eighth aspect of the present invention, for example, in the spiral membrane element according to the seventh aspect, a part of the permeated fluid is delivered from the permeation space to the outer space via the outer circumferential surface while a remaining portion of the permeated fluid is delivered from the permeation space to the inside of the central tube via the opening.

According to a ninth aspect of the present invention, for example, the spiral membrane element according to any one of the first to eighth aspects is used for separating carbon dioxide from a gas mixture containing carbon dioxide and nitrogen.

A membrane separation device according to a tenth aspect of the present invention includes:
the spiral membrane element according to any one of the first to ninth aspects; and
a casing that accommodates the spiral membrane element.

According to an eleventh aspect of the present invention, for example, in the membrane separation device according to the tenth aspect, the casing has a permeated fluid outlet for discharging to an outside of the casing the permeated fluid delivered, via the outer circumferential surface of the spiral membrane element, from the permeation space.

According to a twelfth aspect of the present invention, for example, the membrane separation device according to the tenth or eleventh aspect further includes a first sealing part that is disposed around the spiral membrane element and prevents the feed fluid from flowing into a space between the outer circumferential surface of the spiral membrane element and an inner circumferential surface of the casing.

According to a thirteenth aspect of the present invention, for example, the membrane separation device according to any one of the tenth to twelfth aspects further includes a second sealing part that is disposed around the spiral membrane element and prevents the non-permeated fluid from flowing into a space between the outer circumferential surface of the spiral membrane element and an inner circumferential surface of the casing.

The present invention will be described in detail below. The following description is not intended to limit the present invention to a specific embodiment.

### <Embodiment of spiral membrane element>

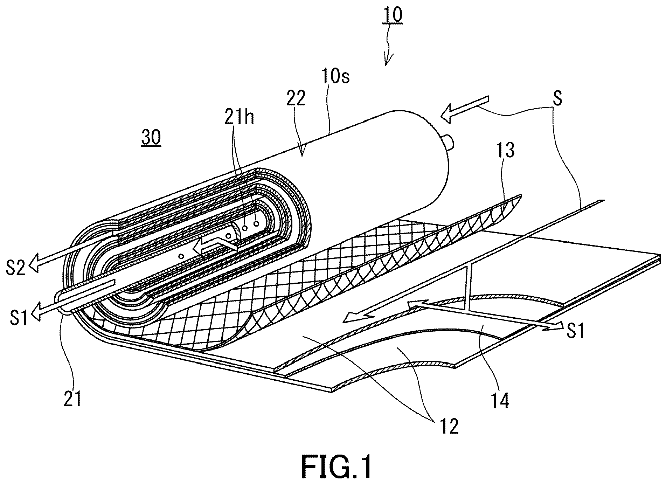

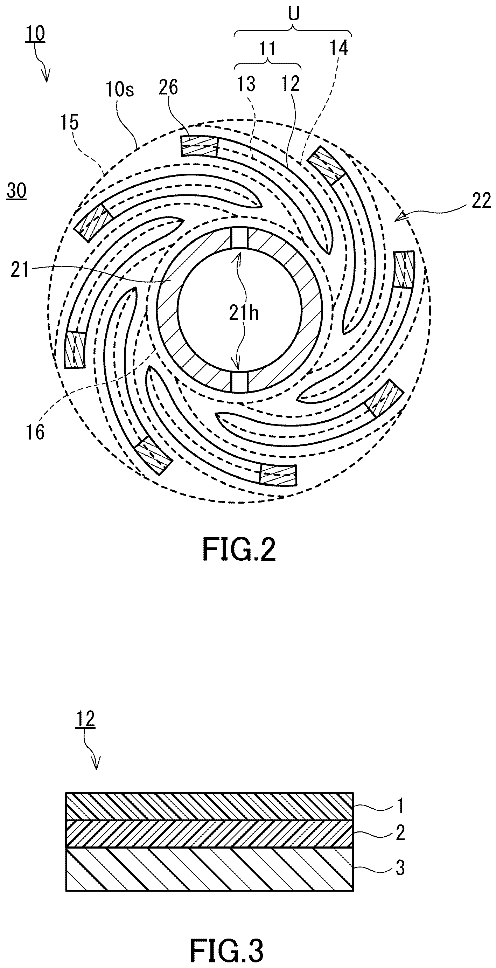

FIGs. 1 and 2 show a spiral membrane element 10 (hereinafter referred to as a "separation membrane element 10") according to the present embodiment. The separation membrane element 10 includes a central tube 21 and a laminate 22 having a separation membrane 12. The laminate 22 is wound around the central tube 21 and disposed around the central tube 21. In other words, the separation membrane 12 is wound around the central tube 21. The separation membrane 12 can separate a feed fluid S into a permeated fluid S1 and a non-permeated fluid S2.

The separation membrane element 10 further has a feed space (a feed fluid flow passage) and a permeation space (a permeated fluid flow passage) separated from each other by the separation membrane 12. The feed space and the permeation space are formed inside the laminate 22. In the separation membrane element 10 of the present embodiment, the above-mentioned permeation space communicates with an outer space 30 of the separation membrane element 10 via an outer circumferential surface 10s of the separation membrane element 10. The separation membrane element 10 allows the permeated fluid S1 to be delivered from the permeation space to the outer space 30 via the above-mentioned outer circumferential surface 10s.

Specifically, during operation of the separation membrane element 10, the feed fluid S is supplied from one end face of the laminate 22 to an inside of the separation membrane element 10 and flows, in parallel with a longitudinal direction of the central tube 21, through the feed space. The feed fluid S is divided by the separation membrane 12 to generate the permeated fluid S1 and the non-permeated fluid S2. The permeated fluid S1 is discharged from the permeation space to the outer space 30 via the outer circumferential surface 10s of the separation membrane element 10. Note that a part of the permeated fluid S1 may be guided to an outside via the central tube 21. The non-permeated fluid S2 is discharged to an outside of the separation membrane element 10 from another end face of the laminate 22. In the present description, the outer circumferential surface 10s refers to an outer circumferential surface of the separation membrane element 10 when viewed in a cross section perpendicular to the longitudinal direction of the central tube 21.

The feed fluid S to be processed by the separation membrane element 10 may be a gas or a liquid. In one example, the feed fluid S is a gas mixture containing an acid gas, particularly a gas mixture containing carbon dioxide and nitrogen.

As shown in FIG. 2, the laminate 22 has a plurality of separation membrane units U. Each of the separation membrane units U is wound around the central tube 21. The number of the separation membrane units U in the laminate 22 is, for example, but not particularly limited to, 2 to 40.

Each of the separation membrane units U has a structural body 11 composed of the separation membrane 12 and a feed spacer 13, and a permeation spacer 14. In FIG. 2, the feed spacer 13 and the permeation spacer 14 are indicated by dashed lines. In each of the separation membrane units U, the separation membrane 12 is folded in half and have end portions joined to each other in such a manner that the separation membrane 12 has a cylindrical structure. In the laminate 22, an inside of the cylindrical structure corresponds to the feed space and an outside of the cylindrical structure corresponds to the permeation space. To join the end portions of the separation membrane 12 to each other, thermal fusion bonding (such as heat sealing or an ultrasonic welder) can be used, for example. However, as shown in FIG. 2, the end portions of the separation membrane 12 may be joined to each other using an adhesive layer 26 including an adhesive.

The feed spacer 13 is disposed in the feed space. Specifically, the feed spacer 13 is surrounded by the separation membrane 12 folded in half and secures a space serving as the feed fluid flow passage.

The permeation spacer 14 is disposed in the permeation space and is laminated on the separation membrane 12 (specifically, on the structural body 11 composed of the separation membrane 12 and the feed spacer 13). In the laminate 22, a plurality of the structural bodies 11 and a plurality of the permeation spacers 14 are laminated alternately. The permeation spacer 14 secures, between two pieces of the structural bodies 11, a space serving as the permeated fluid flow passage. Two structural bodies 11 that are adjacent to each other via the permeation spacer 14 are joined to each other at around one end face of the laminate 22 to which the feed fluid S is supplied (at around one end face of the laminate 22 on a back side of the paper surface of FIG. 2, for example) and at around another end face of the laminate 22 from which the non-permeated fluid S2 is discharged (at around one end face of the laminate 22 on a front side of the paper surface of FIG. 2, for example). In the example of FIG. 2, one piece of the permeation spacer 14 is disposed between two pieces of the structural bodies 11. Note that between two pieces of the structural bodies 11, a plurality of the permeation spacers 14 (particularly two pieces of the permeation spacers 14) may be disposed in the state of being laminated on each other.

As shown in FIG. 2, the central tube 21 typically has a cylindrical shape, particularly a circular cylindrical shape. The central tube 21 can, for example, collect a part of the permeated fluid S1 having permeated through each of the separation membranes 12 and guide it to the outside of the separation membrane element 10. The central tube 21 is provided with an opening 21h that allows an inside of the central tube 21 to communicate with an outside of the central tube 21. Thereby, the permeation space communicates with the inside of the central tube 21 via the opening 21h. The opening 21h is, for example, a through hole formed in a wall surface of the central tube 21. Specifically, the central tube 21 is provided with a plurality of the openings 21h at predetermined intervals along a direction in which the central tube 21 extends. The number of rows of the openings 21h provided along the direction in which the central tube 21 extends is, for example, but not particularly limited to, 1 and 2. The central tube 21 may be provided with two rows of the openings 21h in such a manner that the rows face each other. An outer diameter of the central tube 21 is, for example, 10 to 100 mm, and preferably 12 to 50 mm.

The separation membrane element 10 further includes a first flow passage material 15 that forms the outer circumferential surface 10s thereof. Specifically, the first flow passage material 15 is wound around, outside the laminate 22, the central tube 21 in such a manner as to surround the laminate 22. The permeation spacer 14 included in the laminate 22 is connected to the first flow passage material 15. In contrast, the feed spacer 13 and the first flow passage material 15 are not connected to each other in the separation membrane element 10.

The first flow passage material 15 is configured in such a manner as to allow the permeated fluid S1 to pass therethrough. In one example, the first flow passage material 15 has an opening (a gap) and the permeated fluid S1 can be delivered from the permeation space to the outer space 30 via the opening. Thus, the separation membrane element 10 of the present embodiment makes it possible, for example, to deliver the permeated fluid S1 from the permeation space to the outer space 30 via the first flow passage material 15 that forms the outer circumferential surface 10s. In the separation membrane element 10, the permeation space communicates with the outer space 30 via the first flow passage material 15 that forms the outer circumferential surface 10s.

The separation membrane element 10 further includes a second flow passage material 16. The second flow passage material 16 is positioned between the central tube 21 and the laminate 22 and is wound around the central tube 21 on a side closer to the central tube 21 than the laminate 22 (and the separation membrane 12) is. The second flow passage material 16 secures, between the laminate 22 and the central tube 21, a space serving as the permeated fluid flow passage. The second flow passage material 16 is connected to the permeation spacer 14 included in the laminate 22. The second flow passage material 16 is in contact with the opening 21h of the central tube 21. Thereby, a part of the permeated fluid S1 can flow from the second flow passage material 16 to the inside of the central tube 21 via the opening 21h.

Examples of each of the feed spacer 13, the permeation spacer 14, the first flow passage material 15, and the second flow passage material 16 include a net, a mesh, a wire woven fabric, a fiber woven fabric, a nonwoven fabric, a recessed sheet, and a corrugated sheet. Examples of a material of each of these spacers 13 and 14 and flow passage materials 15 and 16 include: a resin material such as polypropylene (PP), polyethylene (PE), polyethylene terephthalate (PET), polyamide, polyphenylene sulfide (PPS), an ethylene-chlorotrifluoroethylenecopolymer (ECTFE), an epoxy resin, or a urethane resin; a natural polymer; a rubber; and a metal.

A thickness of each of the spacers 13 and 14 and the flow passage materials 15 and 16 is, for example, but not particularly limited to, 100 µm to 2000 µm. An opening ratio of each of the spacers 13 and 14 and the flow passage materials 15 and 16 is, for example, but not particularly limited to, 10% to 80%. The opening ratio of each of the spacers (or the flow passage materials) can be determined by the following method. First, a spacer (or a flow passage material) to be measured is placed on a film and a surface of the spacer is observed with a scanning electron microscope (SEM). From the obtained electron microscope image, an area C1 of the surface of the spacer and an area C2 (an area of a gap formed in the spacer) in which the film can be seen through the spacer are calculated by image processing. The ratio of the area C2 with respect to the area C1 can be determined as the opening ratio.

A structure and the material of the permeation spacer 14 are typically the same as those of the first flow passage material 15 and the second flow passage material 16. However, the structure and the material of the permeation spacer 14 may be different from those of the first flow passage material 15 and the second flow passage material 16.

In the separation membrane element 10, in order to protect the end faces of the laminate 22 and prevent the laminate 22 from extending telescopically, an end face member may be disposed on each of both sides of the laminate 22.

### [Separation membrane]

As shown in FIG. 3, the separation membrane 12 includes, for example, a separation functional layer 1, a porous support member 3 supporting the separation functional layer 1, and an intermediate layer 2 that is disposed between the separation functional layer 1 and the porous support member 3. The intermediate layer 2 is, for example, in direct contact with each of the separation functional layer 1 and the porous support member 3. However, the separation membrane 12 may not include the intermediate layer 2.

### (Separation functional layer)

The separation functional layer 1 is, for example, a layer capable of allowing an acid gas contained in a gas mixture to preferentially permeate therethrough. The separation functional layer 1 preferably includes a resin. Examples of the resin included in the separation functional layer 1 include a polyether block amide resin, a polyamide resin, a polyether resin, a polyimide resin, a polyetherimide resin, a cellulose acetate resin, a silicone resin, a fluororesin, and a polyurethane resin. The separation functional layer 1 preferably includes a polyimide resin or a cellulose acetate resin, and more preferably it includes a cellulose acetate resin. The separation functional layer 1 is preferably composed substantially of a resin. In the present description, the phrase "composed substantially of" means exclusion of other component that alters essential characteristics of a material referred to, and for example means that 95 wt% or more or even 99 wt% or more is composed of the material.

A thickness of the separation functional layer 1 is, for example, 50 µm or less, preferably 25 µm or less, and more preferably 15 µm or less. The thickness of the separation functional layer 1 may be 0.05 µm or more, or 0.1 µm or more.

### (Intermediate layer)

The intermediate layer 2 includes a resin, for example, and may further include nano particles dispersed in the resin (a matrix). The nanoparticles may be separated from each other or partially aggregate in the matrix. A material of the matrix is not particularly limited, and examples thereof include: a silicone resin such as polydimethylsiloxane; a fluorine resin such as polytetrafluoroethylene; an epoxy resin such as polyethylene oxide; a polyimide resin; a polysulfone resin; a polyacetylene resin such as polytrimethylsilylpropyne or polydiphenylacetylene; and a polyolefin resin such as polymethylpentene. The matrix preferably includes a silicone resin.

The nanoparticles may include an inorganic material or an organic material. Examples of the inorganic material included in the nanoparticles include silica, titania, and alumina. The nanoparticles preferably include silica.

A thickness of the intermediate layer 2 is, for example, but not particularly limited to, less than 50 µm, preferably 40 µm or less, and more preferably 30 µm or less. The lower limit of the thickness of the intermediate layer 2 is, for example, but not particularly limited to, 1 µm. The intermediate layer 2 is, for example, a layer having a thickness of less than 50 µm.

### (Porous support member)

The porous support member 3 supports the separation functional layer 1 via the intermediate layer 2. Examples of the porous support member 3 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 3 may be a combination of two or more of these materials.

The porous support member 3 has an average pore diameter of 0.01 to 0.4 µm, for example. A thickness of the porous support member 3 is not particularly limited and it is, for example, 10 µm or more, preferably 20 µm or more, and more preferably 50 µm or more. The thickness of the porous support member 3 is, for example, 300 µm or less, preferably 200 µm or less, and more preferably 150 µm or less.

### [Method for producing spiral membrane element]

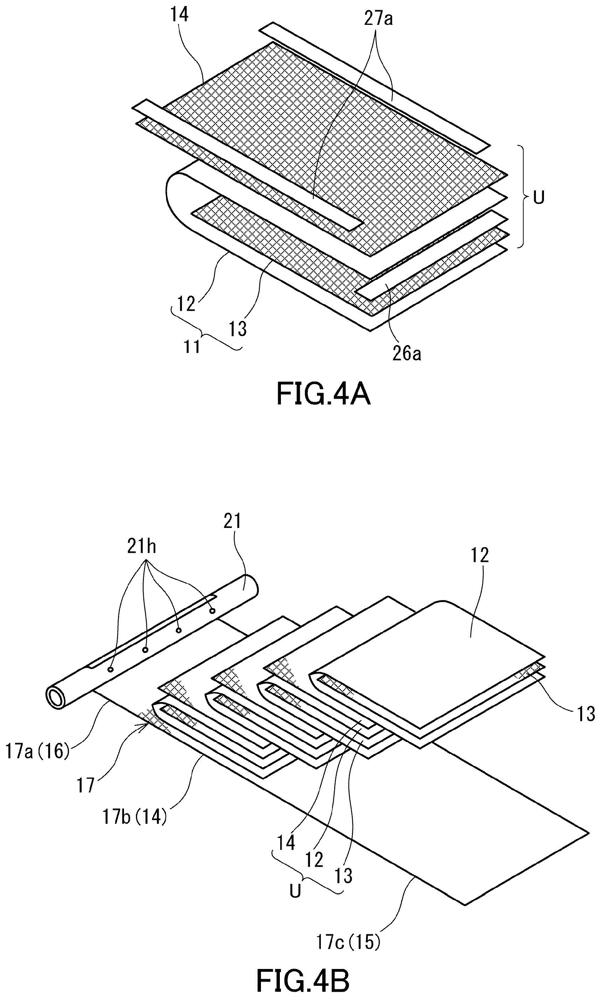

An example of a method for producing the separation membrane element 10 will be described referring to FIGs. 4A and 4B. First, as shown in FIG. 4A, the separation membrane 12 is folded in half in such a manner that the separation functional layer 1 of the separation membrane 12 is positioned inside. The feed spacer 13 is disposed inside the separation membrane 12 folded in half. The end portions of the separation membrane 12 are joined to each other in such a manner that the separation membrane 12 has a cylindrical structure. Thereby, the structural body 11 composed of the separation membrane 12 and the feed spacer 13 is obtained. As described above, the thermal fusion bonding is used, for example, to join the end portions of the separation membrane 12 to each other. However, as shown in FIG. 4A, an adhesive 26a may be applied to join the end portions. At this point, the adhesive 26a may be in the state of being uncured or cured.

Next, the permeation spacer 14 is disposed on the separation membrane 12. In addition, an adhesive 27a is applied onto two sides of an outer circumferential portion of the permeation spacer 14, the two sides facing each other. Thereby, the separation membrane unit U is obtained. The adhesive 27a is in the state of being uncured at this point. Note that a plurality of the permeation spacers 14 (particularly two pieces of the permeation spacers 14) may be laminated on each other and disposed on the separation membrane 12. That is, the separation membrane unit U may have a plurality of the permeation spacers 14.

Next, as shown in FIG. 4B, the central tube 21, a flow passage material 17, and a plurality of the separation membrane units U are prepared. The flow passage material 17 has, for example, a first portion 17a that is directly wound around the central tube 21, a second portion 17b that is laminated on the separation membrane unit U, and a third portion 17c that is connected to the second portion 17b and extends, from the second portion 17b, to a side opposite to the central tube 21. The first portion 17a of the flow passage material 17 corresponds to the above-mentioned second flow passage material 16, the second portion 17b corresponds to the permeation spacer 14, and the third portion 17c corresponds to the first flow passage material 15. The plurality of the separation membrane units U are placed on the second portion 17b of the flow passage material 17 and disposed stepwise. The number of the separation membrane units U is, for example, but not particularly limited to, 2 to 40. Note that the separation membrane unit U positioned uppermost may not have the permeation spacer 14.

Next, the first portion 17a of the flow passage material 17 is wound around the central tube 21, and furthermore the plurality of the separation membrane units U are wound therearound. At this time, the separation membrane unit U positioned uppermost is laminated on the second portion 17b of the flow passage material 17. Next, the third portion 17c of the flow passage material 17 is wound around the central tube 21 in such a manner as to surround the plurality of the separation membrane units U. The numbers of windings of the first portion 17a and the third portion 17c are, for example, but not particularly limited to, 1 to 15, and preferably 2 to 10.

After the separation membrane units U are wound around the central tube 21, the adhesive 27a is cured to allow two pieces of the structural bodies 11 adjacent to each other are joined to each other via the permeation spacer 14. Thus, an assembly including the central tube 21 and the laminate 22 is obtained.

### [Properties of spiral membrane element]

In the spiral membrane element, the membrane separation of the feed fluid by the separation membrane proceeds by utilizing a difference (a pressure difference) between the pressure of the feed fluid and the pressure of the permeated fluid as a driving force. Therefore, a pressure loss caused in the spiral membrane element reduces the above-mentioned pressure difference and decreases a permeation rate of the permeated fluid from the separation membrane. Especially, according to the studies by the present inventors, in a conventional spiral membrane element that allows a permeated fluid to be delivered to an outside only via a central tube, a distance of movement of the permeated fluid in a permeation space tends to be long and a pressure loss tends to be large.

In the separation membrane element 10 of the present embodiment, the permeated fluid S1 is delivered from the permeation space to the outer space 30 via the outer circumferential surface 10s of the separation membrane element 10 during operation. Specifically, the separation membrane element 10 makes it possible to deliver a part of the permeated fluid S1 from the permeation space to the outer space 30 via the outer circumferential surface 10s while delivering a remaining portion of the permeated fluid S1 from the permeation space to the inside of the central tube 21 via the opening 21h of the central tube 21. That is, in the separation membrane element 10 of the present embodiment, the outer circumferential surface 10s and the central tube 21 each function as an outlet for the permeated fluid S1. The permeated fluid S1 in the permeation space can flow out from one of the outlets, which are the outer circumferential surface 10s and the central tube 21, that requires a shorter distance of movement. Accordingly, the distance of movement of the permeated fluid S1 inside the permeation space is shorter in the separation membrane element 10 of the present embodiment than in a conventional spiral membrane element, and thus the separation membrane element 10 of the present embodiment is more suitable for suppressing a pressure loss. That is, the separation membrane element 10 of the present embodiment is suitable for recovering the permeated fluid S1 efficiently.

As a method for operating the separation membrane element 10 of the present embodiment, it is possible to adopt, for example, an operation method (a decompression method) in which the outer space 30 adjacent to the outer circumferential surface 10s and the inside of the central tube 21 are decompressed, and a method (a pressurization method) in which the feed fluid S that is pressurized is supplied to the feed space. For the separation membrane element 10 of the present embodiment, it is also possible to use a method (a sweep method) in which a sweep fluid is supplied from one of the outer circumferential surface 10s and the central tube 21 to the permeation space and the permeated fluid S1 is taken out, together with the sweep fluid, from the other. As the sweep fluid, a sweep gas, such as air or an argon gas, can be mentioned. Especially, the decompression method and the sweep method can adjust a pressure difference between the feed fluid S and the permeated fluid S1 to be smaller than the pressurization method can, and therefore are more suitable as the method for operating the separation membrane element 10 of the present embodiment.

For example, in the case of using carbon dioxide as the feed fluid, a ratio R of a permeation rate T2 (GPU) of the carbon dioxide from the separation membrane element 10 when the separation membrane element 10 is operated according to the decompression method with respect to a permeation rate T1 (GPU) of the carbon dioxide from the separation membrane 12 that is in the state of a flat membrane when the separation membrane 12 that is in the state of a flat membrane is operated according to the decompression method is, for example, 85% or more, preferably 90% or more, 95% or more, 97% or more, or even 99% or more.

In the operation according to the decompression method for determining the permeation rates T1 and T2, the feed fluid to be supplied to the separation membrane 12 that is in the state of a flat membrane or to the separation membrane element 10 has a temperature of 23°C and a pressure of 0.1 MPa. In the decompression method, a space where the permeated fluid is obtained is decompressed to approximately 10 kPa or less using a vacuum pump. Note that GPU means 10⁻⁶•cm³(STP)/(sec•cm²•cmHg). The symbol "cm³(STP)" means the volume of carbon dioxide at 1 atmospheric pressure and 0°C.

### [Use of spiral membrane element]

As the use of the separation membrane element 10 of the present embodiment, there can be mentioned the use for processing a gas, especially the use for separating an acid gas from a gas mixture containing the acid gas. Examples of the acid gas in the gas mixture include carbon dioxide, hydrogen sulfide, carbonyl sulfide, sulfur oxide (SOx), hydrogen cyanide, and nitrogen oxide (NOx), and preferred is carbon dioxide. The gas mixture contains an additional gas other than the acid gas. Examples of the additional gas include a nonpolar gas such as hydrogen or nitrogen, and an inert gas such as helium, and preferred is nitrogen. Particularly, the separation membrane element 10 of the present embodiment is suitably used for separating carbon dioxide from a gas mixture containing carbon dioxide and nitrogen. However, the use of the separation membrane element 10 is not limited to the use for separating an acid gas from the above-mentioned gas mixture.

### <Embodiment of membrane separation device>

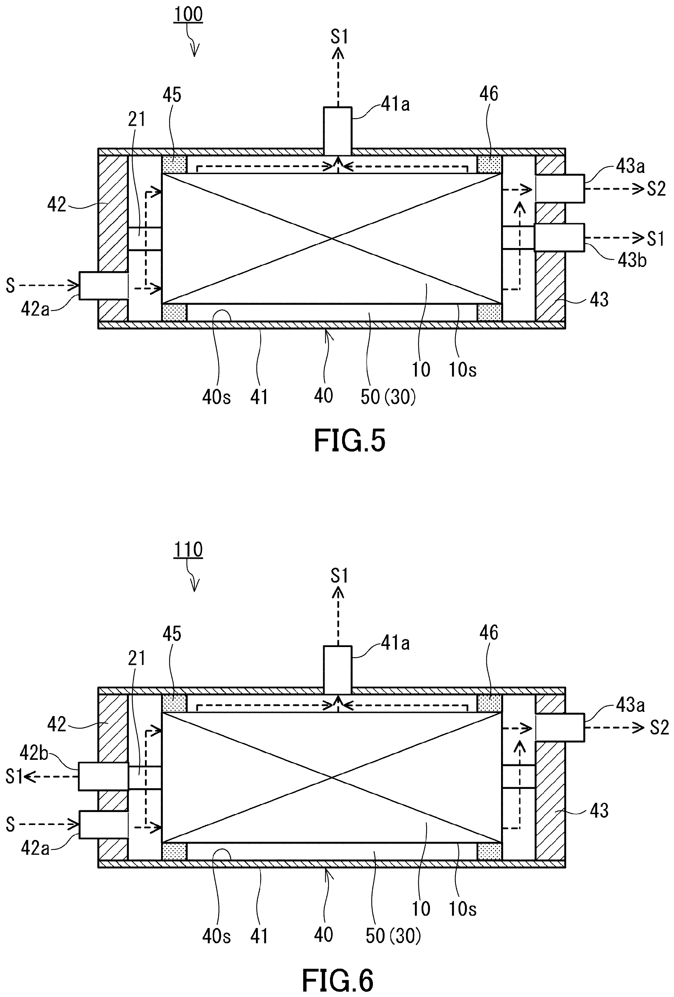

As shown in FIG. 5, a membrane separation device 100 of the present embodiment includes the above-mentioned separation membrane element 10, and a casing 40 that accommodates the separation membrane element 10. The separation membrane element 10 is configured, for example, to be detachable from the casing 40. As the casing 40, a known high-pressure vessel can be used, for example.

The casing 40 has a casing main body 41, a first end plate 42, and a second end plate 43. The casing main body 41 has, for example, a circular cylindrical shape or a rectangular cylindrical shape, and is made from a material having sufficient pressure resistance. The first end plate 42 is attached to one end portion of the casing main body 41 and closes that end portion. The second end plate 43 is attached to another end portion of the casing main body 41 and closes that end portion.

The casing 40 has ports 41a, 42a, 43a, and 43b. These ports are ports for allowing an inside of the casing 40 to communicate with an outside of the casing 40. The port 41a is provided to the casing main body 41 and functions as a permeated fluid outlet for discharging to the outside of the casing 40 the permeated fluid S1 delivered, via the outer circumferential surface 10s of the separation membrane element 10, from the permeation space. The number of the ports 41a may be one, or two or more.

The port 42a is provided to the first end plate 42 and functions as a feed fluid inlet for supplying the feed fluid S to the inside of the casing 40. The number of the ports 42a may be one, or two or more.

The port 43a is provided to the second end plate 43 and functions as a non-permeated fluid outlet for discharging the non-permeated fluid S2 to the outside of the casing 40. The number of the ports 43a may be one, or two or more.

The port 43b is provided to the second end plate 43 and connected to the central tube 21. The port 43b functions as a permeated fluid outlet for discharging to the outside of the casing 40 the permeated fluid S1 delivered from the permeation space to the inside of the central tube 21.

Each of the ports 41a, 42a, 43a, and 43b may be a simple opening, or a nozzlelike opening as shown in FIG. 5.

The membrane separation device 100 further includes a first sealing part 45 and a second sealing part 46 that are disposed around the separation membrane element 10. The first sealing part 45 is disposed at an upstream-side end portion of the separation membrane element 10 and can prevent the feed fluid S from flowing into a space 50 between the outer circumferential surface 10s of the separation membrane element 10 and an inner circumferential surface 40s of the casing 40. The second sealing part 46 is disposed at a downstream-side end portion of the separation membrane element 10 and can prevent the non-permeated fluid S2 from flowing into the above-mentioned space 50. In the membrane separation device 100, an inlet and an outlet of the space 50 are closed with the first sealing part 45 and the second sealing part 46. In other words, the space 50 is sealed with the first sealing part 45 and the second sealing part 46. Note that the space 50 corresponds to the above-mentioned outer space 30.

As the first sealing part 45 and the second sealing part 46, a sealing material (a U packing) with a U-shaped cross section, an O-ring sealing material, or the like can be used.

The membrane separation device 100 can be operated by the following method, for example. First, the feed fluid S is supplied to the inside of the casing 40 via the port 42a. The feed fluid S is supplied into the feed space of the separation membrane element 10 and moves, in the feed space, in the longitudinal direction of the central tube 21. Here, the feed fluid S is brought into contact with one surface of the separation membrane 12. Next, in the state in which the feed fluid S is in contact with the one surface of the separation membrane 12, the permeation space adjacent to another surface of the separation membrane 12 is decompressed. Specifically, it is possible to decompress the permeation space by decompressing the space 50 via the port 41a while decompressing the inside of the central tube 21 via the port 43b.

Decompressing the permeation space allows the feed fluid S to permeate through the separation membrane 12, so that the permeated fluid S1 is supplied to the permeation space. A part of the permeated fluid S1 (the permeated fluid S1 supplied to a location relatively close to the outer circumferential surface 10s) is delivered from the permeation space to the space 50 via the outer circumferential surface 10s. This permeated fluid S1 is discharged to an outside of the membrane separation device 100 via the port 41a. A remaining portion of the permeated fluid S1 (the permeated fluid S1 supplied to a location relatively close to the central tube 21) is delivered from the permeation space to the inside of the central tube 21 via the opening 21h of the central tube 21. This permeated fluid S1 is discharged to the outside of the membrane separation device 100 via the port 43b.

The feed fluid S (the non-permeated fluid S2) processed by the separation membrane element 10 is discharged from the feed space of the separation membrane element 10, and is discharged to the outside of the membrane separation device 100 via the port 43a.

The method for operating the membrane separation device 100 is not limited to the above-mentioned decompression method, and it is also possible to use a pressurization method in which the feed fluid S that is pressurized is supplied to the inside of the casing 40, and a sweep method in which a sweep fluid is used. According to the sweep method, it is possible to supply the sweep fluid from one of the port 41a and the port 43b and take out the permeated fluid S1, together with the sweep fluid, from the other. For example, in the case where the sweep fluid is supplied from the port 43b, the sweep fluid passes through the inside of the central tube 21 and is delivered to the permeation space of the separation membrane element 10. The sweep fluid is mixed with the permeated fluid S1 in the permeation space, so that a fluid mixture is obtained. The fluid mixture is delivered to the space 50 from the permeation space via the outer circumferential surface 10s of the separation membrane element 10 and further is discharged to the outside of the membrane separation device 100 via the port 41a.

As described above, the decompression method and the sweep method can adjust the pressure difference between the feed fluid S and the permeated fluid S1 to be smaller than the pressurization method can, and therefore the decompression method and the sweep method tend to make it possible, for example, to sufficiently inhibit the feed fluid S from leaking into the space 50 from a gap between the first sealing part 45 and the separation membrane element 10 and the like.

### [Modification of membrane separation device]

In the membrane separation device 100, the combination of the ports provided to the casing 40 is not limited to the above-mentioned one. A membrane separation device 110 shown in FIG. 6 has the same configuration as that of the membrane separation device 100, except that the membrane separation device 110 has, instead of the above-mentioned port 43b, a port 42b provided to the first end plate 42. Therefore, the elements common between the above-mentioned membrane separation device 100 and the membrane separation device 110 of Modification are denoted by the same reference numerals, and the description of such elements may be omitted. That is, the description of one embodiment is applicable to the other embodiment unless technical inconsistency occurs. Furthermore, the features of the embodiments may be combined with each other unless technical inconsistency occurs.

The port 42b is provided to the first end plate 42 as described above, and is connected to the central tube 21. The port 42b functions as a permeated fluid outlet for discharging to the outside of the casing 40 the permeated fluid S1 delivered from the permeation space to the inside of the central tube 21.

In the membrane separation device 110, the permeated fluid S1 delivered to the inside of the central tube 21 moves, during operation, in a direction opposite to a direction in which the feed fluid S moves inside the separation membrane element 10. The membrane separation device 110 is a countercurrent flow-type membrane separation device. During operation of the membrane separation device 110, a flow rate of the permeated fluid S1 delivered to the inside of the central tube 21 is usually higher on an upstream side (a side of the inlet for the feed fluid S) of the separation membrane element 10 than on a downstream side (a side of the outlet for the feed fluid S) of the separation membrane element 10. In the membrane separation device 110, the permeated fluid S1 delivered to the inside of the central tube 21 around the upstream of the separation membrane element 10 is immediately discharged from the port 42b. That is, in the membrane separation device 110, the permeated fluid S1 with a high flow rate moves a short distance inside the central tube 21. Therefore, it can be said that the membrane separation device 110 is suitable for reducing a pressure loss resulting from the movement of the permeated fluid S1 inside the central tube 21.

### <Embodiment of membrane separation system>

A membrane separation system of the present embodiment includes, for example, the above-mentioned membrane separation device 100 and a decompression device. The membrane separation system may include the membrane separation device 110 instead of the membrane separation device 100. The membrane separation system includes two decompression devices, for example. One of the two decompression devices can decompress the space 50 via the port 41a of the membrane separation device 100, and the other can decompress the inside of the central tube 21 via the port 43b. However, the membrane separation system may be configured in such a manner that one decompression device can decompress both of the space 50 and the inside of the central tube 21. A specific example of the decompression device is a vacuum device such as a vacuum pump.

The membrane separation system may include a plurality of the membrane separation devices 100, and the plurality of the membrane separation devices 100 may be connected to each other in series or in parallel. In the present description, the phrase "a plurality of the membrane separation devices 100 are connected to each other in series" refers to a configuration in which a plurality of the membrane separation devices 100 are connected to each other in such a manner that the feed fluid S (the non-permeated fluid S2) discharged from the port 43a of the membrane separation device 100 that precedes is supplied to the port 42a of the membrane separation device 100 that follows the preceding one. The phrase "a plurality of the membrane separation devices 100 are connected to each other in parallel" refers to a configuration in which a plurality of the membrane separation devices 100 are connected to each other in such a manner that the feed fluid S is supplied to the port 42a of each of the plurality of the membrane separation devices 100. The number of the membrane separation devices 100 in the membrane separation system is, for example, but not particularly limited to, 2 to 5.

The membrane separation system may include an additional membrane separation device that further processes the permeated fluid S1 discharged from the membrane separation device 100. As the additional membrane separation device, a membrane separation device having the same configuration as that of the membrane separation device 100 can be used.

### EXAMPLES

Hereinafter, the present invention will be described in more detail by way of Example and Comparative Example, but the present invention is not limited to these examples.

### (Example 1)

### [Production of separation membrane]

First, a coating liquid containing a silicone resin and a polyurethane resin at a weight ratio of 9:1 was prepared. The coating liquid contained water as a solvent. Next, the coating liquid was applied onto a porous support member by a gravure coating method to obtain a coating film. As the porous support member, a UF membrane (ultrafiltration membrane) RS-50 (a laminate of a PVDF porous layer and a PET nonwoven fabric) available from Nitto Denko Corporation was used. The obtained coating film was dried to form a separation functional layer. Thus, a separation membrane was obtained.

### [Production of spiral membrane element]

A spiral membrane element of Example 1 was produced using a central tube and the above-mentioned separation membrane by the method explained with reference to FIGs. 4A and 4B. As the permeation spacer, the first flow passage material, and the second flow passage material, #1000E available from KB SEIREN LTD. was used. As the feed spacer, 34mil available from TOKYO PRINTING INK MFG. CO., LTD. was used. In Example 1, two pieces of the permeation spacers were laminated on each other and disposed on the separation membrane to produce a separation membrane unit. In the spiral membrane element of Example 1, the permeation space communicated with the outer space via the outer circumferential surface of the spiral membrane element.

### (Comparative Example 1)

A spiral membrane element of Comparative Example 1 was produced in the same manner as in Example 1, except that a configuration in which the permeated fluid was delivered to the outside only via the central tube was adopted. In the spiral membrane element of Comparative Example 1, the permeation space did not communicate with the outer space via the outer circumferential surface of the spiral membrane element, and the spiral membrane element had the same structure as that of a conventional spiral membrane element.

### [Evaluation on separation membrane in state of flat membrane]

The separation membrane used in each spiral membrane element was measured, in the state of a flat membrane, for the permeation rate T1 (GPU) of the carbon dioxide. The measurement of the permeation rate T1 was made by the following method using a differential pressure-type gas permeability measuring device (GTR-31AHND available from GTR TEC Corporation). First, the separation membrane that is in the state of a flat membrane was placed in a metal cell, and the metal cell was sealed with an O-ring so that no leakage would occur. The separation membrane had a membrane area of 3.14 cm². Next, a feed fluid (carbon dioxide) was injected into the metal cell in such a manner that the feed fluid was in contact with the principal surface, on the separation functional layer side, of the separation membrane. The feed fluid injected into the metal cell had a temperature of 23°C and a pressure of 0.1 MPa. Next, a space adjacent to the principal surface, on the porous support member side, of the separation membrane was decompressed to approximately 10 kPa or less using a vacuum pump. Thereby, a permeated fluid was obtained from the principal surface, on the porous support member side, of the separation membrane. The permeation rate T1 of the carbon dioxide was calculated based on the composition of the obtained permeated fluid, the weight of the permeated fluid, etc. The composition, etc. of the permeated fluid were measured using gas chromatography (G2700T available from Yanako Technical Science Co., Ltd.).

### [Evaluation on spiral membrane element]

Next, the spiral membrane element was measured for the permeation rate T2 (GPU) of the carbon dioxide in the case where the spiral membrane element was operated according to the decompression method.

The permeation rate T2 was measured by the following method. First, a feed fluid (carbon dioxide) was supplied to the feed fluid flow passage of the spiral membrane element. The feed fluid had a temperature of 23°C and a pressure of 0.1 MPa. Next, the inside of the central tube and the outer space adjacent to the outer circumferential surface of the spiral membrane element were decompressed to approximately 10 kPa or less using a vacuum pump. Thus, a permeated fluid was obtained. The permeation rate T2 of the carbon dioxide was calculated based on the flow rate, etc. of the obtained permeated fluid. The flow rate of the permeated fluid was measured using a soap film flow meter (available from HORIBA, Ltd.).

The ratio R of the permeation rate T2 with respect to the permeation rate T1 was calculated. Table 1 shows the results.

**[Table 1]**

| | The number of permeation spacers per separation membrane unit | Ratio R (%) |
|---|---|---|
| Example 1 | 2 | 99.4 |
| Comparative Example 1 | 2 | 86.0 |

As understood from Table 1, the separation membrane element of Example 1 in which the permeation space communicated with the outer space via the outer circumferential surface had a higher value of the ratio R than that of Comparative Example. This result reveals that a decrease in the permeation rate of the permeated fluid from the separation membrane is suppressed in the spiral membrane element of the present embodiment, and that the spiral membrane element of the present embodiment is suitable for recovering the permeated fluid efficiently.

### INDUSTRIAL APPLICABILITY

The spiral membrane element of the present embodiment is suitable for separating an acid gas from a gas mixture containing the acid gas. In particular, the spiral membrane element of the present embodiment is suitable for separating carbon dioxide from an off-gas of a chemical plant or a thermal power plant.

## Claims

1. A spiral membrane element comprising:
a central tube;
a separation membrane that is wound around the central tube and separates a feed fluid into a permeated fluid and a non-permeated fluid; and
a feed space and a permeation space separated from each other by the separation membrane, wherein
the permeation space communicates with an outer space of the spiral membrane element via an outer circumferential surface of the spiral membrane element.

2. A spiral membrane element comprising:
a central tube;
a separation membrane that is wound around the central tube and separates a feed fluid into a permeated fluid and a non-permeated fluid; and
a feed space and a permeation space separated from each other by the separation membrane, wherein
the permeated fluid is delivered from the permeation space to an outer space of the spiral membrane element via an outer circumferential surface of the spiral membrane element.

3. The spiral membrane element according to claim 1 or 2, further comprising a first flow passage material that forms the outer circumferential surface and allows the permeated fluid to pass through the first flow passage material.

4. The spiral membrane element according to claim 3, further comprising a permeation spacer disposed in the permeation space, wherein
the permeation spacer is connected to the first flow passage material.

5. The spiral membrane element according to claim 4, further comprising a second flow passage material that is connected to the permeation spacer and is wound around the central tube on a side closer to the central tube than the separation membrane is.

6. The spiral membrane element according to claim 1 or 2, further comprising a feed spacer disposed in the feed space, wherein
the feed spacer is surrounded by the separation membrane folded in half.

7. The spiral membrane element according to claim 1 or 2, wherein
the central tube has an opening that allows an inside of the central tube to communicate with an outside of the central tube, and
the permeation space communicates with the inside of the central tube via the opening.

8. The spiral membrane element according to claim 7, wherein a part of the permeated fluid is delivered from the permeation space to the outer space via the outer circumferential surface while a remaining portion of the permeated fluid is delivered from the permeation space to the inside of the central tube via the opening.

9. The spiral membrane element according to claim 1 or 2, wherein the spiral membrane element is used for separating carbon dioxide from a gas mixture containing carbon dioxide and nitrogen.

10. A membrane separation device comprising:
the spiral membrane element according to claim 1 or 2; and
a casing that accommodates the spiral membrane element.

11. The membrane separation device according to claim 10, wherein the casing has a permeated fluid outlet for discharging to an outside of the casing the permeated fluid delivered, via the outer circumferential surface of the spiral membrane element, from the permeation space.

12. The membrane separation device according to claim 10, further comprising a first sealing part that is disposed around the spiral membrane element and prevents the feed fluid from flowing into a space between the outer circumferential surface of the spiral membrane element and an inner circumferential surface of the casing.

13. The membrane separation device according to claim 10, further comprising a second sealing part that is disposed around the spiral membrane element and prevents the non-permeated fluid from flowing into a space between the outer circumferential surface of the spiral membrane element and an inner circumferential surface of the casing.
